Europäisches Patentamt

European Patent Office

Office européen des brevets

(19)

(11) Veröffentlichungsnummer : **0 415 478 B1**

(12) **EUROPÄISCHE PATENTSCHRIFT**

(45) Veröffentlichungstag der Patentschrift :
**12.01.94 Patentblatt 94/02**

(51) Int. Cl.⁵ : **C09C 1/36,** C09C 3/06

(21) Anmeldenummer : **90202196.3**

(22) Anmeldetag : **14.08.90**

(54) **Elektrisch leitfähiges Rutilmischphasen-Pigment, Verfahren zu seiner Herstellung sowie dessen Verwendung.**

(30) Priorität : **01.09.89 DE 3929057**

(43) Veröffentlichungstag der Anmeldung :
**06.03.91 Patentblatt 91/10**

(45) Bekanntmachung des Hinweises auf die
Patenterteilung :
**12.01.94 Patentblatt 94/02**

(84) Benannte Vertragsstaaten :
**DE**

(56) Entgegenhaltungen :
**EP-A- 0 025 583**
**EP-A- 0 267 535**
**PATENT ABSTRACTS OF JAPAN vol. 11, no. 150 (C-422)(2597) 15. Mai 1987; & JP-A-61 286 221**
**Silicates Industriels 1984/7-8, Seiten 151-57; N. Yoshizumi: "Electrically conductive powder with white color tone"**

(73) Patentinhaber : **METALLGESELLSCHAFT Aktiengesellschaft**
**Postfach 10 15 01, Reuterweg 14**
**D-60015 Frankfurt (DE)**
Patentinhaber : **MITSUI MINING & SMELTING CO., LTD.**
**2-1-1, Nihonbashi-Muromachi**
**Chuo-ku Tokyo-to 103 (JP)**

(72) Erfinder : **Aderhold, Clemens, Dr.**
**Josef-Brocker-Dyk 143**
**D-4150 Krefeld (DE)**
Erfinder : **Griebler, Wolf-Dieter, Dr.**
**Zahnstrasse 25**
**D-4130 Moers 1 (DE)**
Erfinder : **Hocken, Jörg, Dr.**
**Oberkasseler Strasse 45**
**D-4000 Düsseldorf 11 (DE)**
Erfinder : **Rosin, Uwe**
**Moerser Strasse 180**
**D-4100 Duisburg 17 (DE)**
Erfinder : **Rudolph, Günther, Dr.**
**Albert-Schweitzer-Strasse 5**
**D-6451 Neuberg 1 (DE)**
Erfinder : **Hayashi, Takao**
**5-4-5 Sako-cho, Hikoshima**
**Shimonoseki-shi, Yamaguchi-ken (JP)**
Erfinder : **Sato, Norihiro**
**6-7-13, Sako-cho, Hikoshima**
**Shimonoseki-shi, Yamaguchi-ken (JP)**
Erfinder : **Hosoi, Manabu**
**194 Kamikomachi**
**Omiya-shi, Saitama-ken (JP)**
Erfinder : **Kasahara, Nobuyoshi**
**812-9, Mizuno**
**Sayama-shi, Saitama-ken (JP)**

(74) Vertreter : **Rieger, Harald, Dr.**
**Reuterweg 14**
**D-60323 Frankfurt (DE)**

EP 0 415 478 B1

## Beschreibung

Elektrisch leitfähiges Rutilmischphase-Pigment, Verfahren zu seiner Herstellung sowie dessen Verwendung.

Die Erfindung betrifft ein elektrisch leitfähiges Rutilmischphasen-Pigment und ein Verfahren zu seiner Herstellung sowie die Verwendung des Pigments als Additiv zur Herstellung gefärbter antistatischer Kunststoffe und gefärbter antistatischer Anstriche.

Die elektrisch isolierenden Eigenschaften von Kunststoffen sind bekannt. In zunehmendem Maße wird jedoch auch eine gewisse elektrische Leitfähigkeit von Kunststoffen für besondere Anwendungen gefordert. Neben der Abschirmung elektronischer Bauelemente von äußeren, elektromagnetischen Feldern (z.B. im Fall von Computergehäusen) sind dies insbesondere Anwendungsfälle, in denen statische Elektrizität abgeleitet werden soll. Beispielhaft seien hier genannt die Verpackungsindustrie (z.B. Lagerung von Sprengstoffen, IC-Schaltelementen etc.), antistatisch ausgerüstete medizinische Gummiwaren, antistatisch ausgerüstete Teppichböden, antistatische "Clean Rooms", elektrisch leitfähige verbindende Metallklebstoffe. Elektrisch leitfähige bzw. mit einem elektrisch leitfähigen Oberflächenfilm versehene Kunststoffteile können auch elektrostatisch lackiert werden.

Es ist bekannt, die elektrische Leitfähigkeit von Polymeren durch Zusatz von leitfähigen Partikeln herbeizuführen. Beispielsweise eignen sich Metall- oder Rußpartikel, halbleitende Oxide wie Zinkoxid oder Iodide wie Kupferjodid zum Einsatz. In aller Regel sind die mit handelsüblichen Additiven gefüllten Polymere wegen ihres Gehalts an Ruß- oder Metallpartikeln schwarz gefärbt, was in vielen Fällen nicht erwünscht ist. Mit z.B. Zinkoxid gefüllte Polymere sind hinsichtlich ihrer elektrischen Leitfähigkeit nicht stabil, mit z.B. Kupferjodid gefüllte Polymere nicht ausreichend inert. Es ist auch aus EP-PS 025 583 bekannt, Titandioxid-Teilchen mit einer Überzugsschicht zu versehen, die aus mit Antimon dotiertem Zinnoxid besteht. Das vorbekannte weiße elektrisch leitfähige Pulver kann durch Zusatz von Farbstoffen oder Pigmenten in ein farbiges elektrisch leitfähiges Pigment überführt werden.

Mischphasenpigmente mit Rutilstruktur sind lange bekannt. Durch Einbau von Metalloxiden, wie z.B. NiO, $Cr_2O_3$, CuO, MnO mit $Sb_2O_5$, $Nb_2O_5$, $WO_3$ in das Kristallgitter des Titandioxids kann man Mischoxide mit Rutilstruktur herstellen, deren Farbtöne sich über weite Bereiche des sichtbaren Spektrums erstrecken. Größere technische Bedeutung haben die Nickel- und Chrom-Rutilmischphasen-Pigmente erlangt. Beim Einbau von Nickeloxid und Chromoxid als farbgebende Oxide in $TiO_2$ werden zum Wertigkeitsausgleich höherwertige Metalloxide, besonders von Antimon, aber auch von Niob und/oder Wolfram eingebaut. Die Herstellung solcher Pigmente wird durch Glühung bei Temperaturen von etwa 900 bis etwa 1200°C von Anatas und/oder Hydraten des Titandioxids mit einbaufähigen Metalloxiden oder diese liefernde Verbindungen und anschließendem Mahlen bewirkt (Ullmanns Encyklopädie der technischen Chemie, 4. Aufl., Bd. 18 (1979), Seiten 608-609). Die Rutilmischphasen-Pigmente weisen ein hohes Maß an Licht-, Wetter-, Säure- und Alkalibeständigkeit sowie Resistenz gegen andere Chemikalien auf und besitzen gleichzeitig eine Temperaturstabilität bis ca. 1000°C. Die hervorragende Farbtonbeständigkeit - Licht- und Wetterbeständigkeit auch in starken Aufhellungen - bei der Bewitterung von Lacken beispielsweise auf Basis von Alkyd-Melaminharzen oder Siliconpolyestern prädestinieren diese Pigmente zur Pigmentierung von Einbrenn- oder Coil-Coat-Lacken. Aber auch die Pigmentierung von Kunststoffen mit Rutilmischphasen-Pigmenten gewinnt in zunehmendem Maße an Bedeutung. Die größte wirtschaftliche Bedeutung haben bisher Chrom(III)oxid-haltige Rutilmischphasen-Pigmente erlangt, die insbesondere Antimonoxid, aber auch Niob- und/oder Wolframoxid als höherwertige Metalloxide eingebaut enthalten.

Der Erfindung liegt die Aufgabe zugrunde, ein elektrisch leitfähiges Buntpigment bereitzustellen, das eine stabile elektrische Leitfähigkeit mit guter Dispergierbarkeit in Polymeren und Harzen verbindet und eine gute Farbtonbeständigkeit bei verschiedensten Farbtönen aufweist.

Zur Lösung der Aufgabe geht die Erfindung von einem anorganischen Buntpigment aus. Demgemäß ist die Erfindung dadurch gekennzeichnet, daß das Buntpigment aus einem Rutilmischphasen-Pigment als Substrat besteht, das einen elektrisch leitfähigen Überzug aus mit Antimon dotiertem Zinnoxid aufweist.

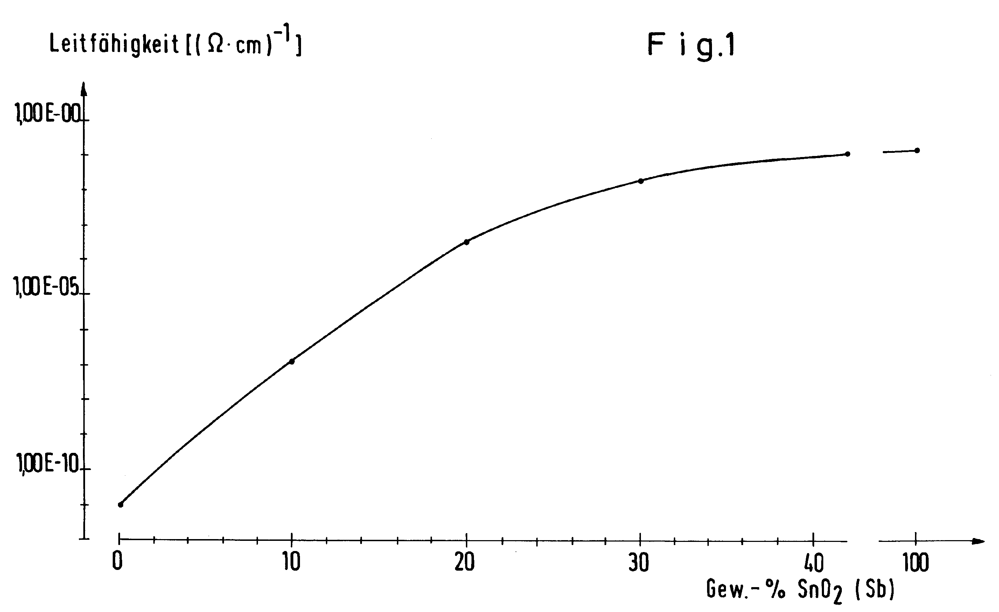

Der Überzug wirkt sich in mehrfacher Hinsicht günstig aus. Obwohl der Zinndioxid-Anteil des Pigments sich auf z.B. 30 Gew.-% beschränkt, verhält sich das Gesamtprodukt in seinen elektrischen Eigenschaften wie reines, elektrisch leitfähiges Zinnoxid. Indiesem Zusammenhang wird auf das Diagramm der Fig. 1 Bezug genommen. Das Diagramm veranschaulicht die Abhängigkeit der elektrischen Leitfähigkeit eines mit Sb-dotiertem Zinndioxid beschichteten Rutilmischphasen-Pulvers vom Gehalt an Zinndioxid (Gew.-%). Infolge der vergleichsweise dünnen Halbleiterschicht bleibt die Farbe der Rutilmischphasen-Pigmente weitgehend erhalten, auch die Helligkeit sinkt praktisch nicht ab (s. Tabelle 1). Da die elektrisch leitfähigen Pigmente der Erfindung ein Polymer nicht nur leitfähig ausrüsten, sondern auch gleichzeitig einfärben, kann über eine Erhöhung der PVK dieser Pigmente unter jetzt möglichem Verzicht auf zusätzliche (nicht leitende) Buntpigmente die Endleitfähigkeit eines Systems erhöht werden. Dies bedeutet einen Vorteil gegenüber handelsüblichen anderen hellen, aber nicht farbigen, leitfähigen Pigmenten.

Voraussetzung für einen weiten Einsatz dieser Pigmente ist eine auch bei Anwendung typischer Verfahren (Mahlung, Dispergierung etc.) ausreichende Haftfestigkeit der dotierten Zinndioxid-Schicht auf dem Substrat aus Rutilmischphasen-Pigment. Die Gewährleistung einer guten Haftung der aufgebrachten Schichten auf bunten Rutilmischphasen-Pigmenten ist kristallchemisch begründet. Die Kristallstruktur der bunten Rutilmischphasen-Pigmente entspricht der Kristallstruktur der tetragonal kristallisierenden Zinndioxid-Schicht, so daß epitaxisches Aufwachsen möglich ist.

Die zu ausreichender elektrischer Leitfähigkeit notwendige Menge elektrisch leitfähigen Zinndioxids (dotiert mit Antimonoxid) hängt von der spezifischen Oberfläche des eingesetzten Rutilmischphasen-Pigmentes ab. Das heißt, es muß eine zusammenhängende, ausreichend dicke Halbleiterschicht auf dem Substrat erzeugt werden können. Eine Schichtdicke unter 2 nm ist hierbei nicht ausreichend, oberhalb von 80 nm verstärkt sich die Gefahr, daß die Halbleiterschicht während der Einarbeitung des Pigmentes in ein System abgetrennt wird. Die elektrische Leitfähigkeit strebt in dem Bereich oberhalb 80 nm gegen einen Grenzwert. Während die dunkelblaue bis schwarze Farbe des reinen Halbleiters immer stärker überwiegt, geht der Vorteil der vorliegenden Erfindung, nämlich bunte, leitfähige Rutilmischphasen-Pigmente, verloren. Dementsprechend liegt die bevorzugte Schichtdicke zwischen 10 und 30 nm.

Bei einer typischen spezifischen Oberfläche (BET) von 1 bis 10 $m^2/g$ des Rutilmischphasen-Pigments und vorzugsweise 3 bis 5 $m^2/g$ bedeutet dies einen Anteil der Halbleiterschicht von ungefähr 30 Gew.-%.

Des weiteren ist die erreichbare spezifische Leitfähigkeit eines erfindungsgemäß elektrisch leitfähig beschichteten bunten Rutilmischphasen-Pigments abhängig von dem Antimon-Gehalt (gerechnet als Sb-Oxid) in der Zinndioxid-Schicht. Der Antimon-Gehalt beträgt im allgemeinen 1 bis 15 Gew.-% Sb-Oxid, insbesondere 6 bis 12 Gew.-% (bezogen auf Zinndioxid). In diesem Bereich wird eine ausreichende elektrische Leitfähigkeit mit nur geringen Einbußen der optischen Leistungsfähigkeit der bunten Rutilmischphasen-Pigmente, wie Farbtonbeständigkeit, verknüpft.

Die elektrische Leitfähigkeit der bunten Rutilmischphasen-Pigmente der Erfindung liegt zwischen 1,2 . $10^{-4}$ und 7 . $10^{-2}$ $(\Omega cm)^{-1}$. Die elektrische Leitfähigkeit der Pulver aus elektrisch leitfähigen Rutilmischphasen-Pigmenten wird an 1 bis 5 mm dicken Plättchen durch Messung des Durchgangswiderstandes gemessen. Hierzu werden die Pulver unter einem Druck von 90 bar zur Plättchen verpreßt und unter einem Druck der angelegten Elektroden von 2 bis 5 bar gemessen.

Die Erfindung betrifft des weiteren ein Verfahren zu Herstellung der elektrisch leitfähigen, bunten Rutilmischphasen-Pigmente. Das Verfahren besteht darin, daß eine mineralsaure wäßrige Dispersion eines Rutilmischphasen-Pigments unter stetem Rühren mit einer mineralsauren hydrolysierbare Zinnverbindungen enthaltenden Lösung sowie mit einer mineralsauren hydrolysierbare Antimonverbindungen enthaltenden Lösung versetzt wird, die hydrolysierbaren Verbindungen durch Erhöhung des pH-Wertes hydrolysiert werden und das mit den hydroxidischen Fällungsprodukten überzogene Rutilmischphasen-Pigment, ggf. nach Alterung, abgetrennt, getrocknet und calciniert wird.

Die jeweiligen mineralsauren Lösungen, welche die hydrolysierbaren Zinn- bzw. Antimonverbindungen enthalten, können der mineralsauren wäßrigen Dispersion des Rutilmischphasen-Pigments gleichzeitig zugesetzt werden, so daß die Hydrolyse der Verbindungen gleichzeitig in Gegenwart des Rutilmischphasen-Pigments durch Anheben des pH-Wertes erfolgt. Es ist jedoch vorteilhafter, wenn die jeweiligen mineralsauren, hydrolysierbare Verbindungen enthaltenden Lösungen nacheinander und jeweils nach Hydrolyse der betreffenden Zinnverbindungen der wäßrigen Dispersion des Rutilmischphasen-Pigments zugesetzt werden.

Die Dispersion bzw. die mineralsauren Lösungen werden zweckmäßig mit Salzsäure stark sauer (pH 0 bis 2) eingestellt. Es kann aber auch Schwefelsäure verwendet werden.

Als hydrolysierbare Verbindungen werden zweckmäßig die Halogenide von Zinn und Antimon eingesetzt, vorzugsweise die Chloride wie Zinntetrachlorid und Antimontrichlorid.

Zur Durchführung des Verfahrens der Erfindung wird zunächst eine Suspension eines Rutilmischphasen-Pigments in Wasser bereitet und der pH-Wert vorzugsweise mit Salzsäure stark sauer (pH 0 bis 2) eingestellt. Die Konzentration an Feststoff wird lediglich durch die Forderung nach einer einheitlichen, homogenen Suspension begrenzt und liegt im allgemeinen bei 10 bis 500 g/l. Mit einer geringen ca. 1 bis 5% der benötigten Gesamtmenge betragenden Menge einer hydrolysierbaren Zinnverbindung vorzugsweise Zinntetrachlorid werden die Oberflächen des Rutilmischphasen-Pigments für die folgende Beschichtung vorbereitet. Nach pH-Anhebung mit einer starken Base, vorzugsweise Natronlauge, auf einen pH-Wert >10, werden gleichzeitig sowohl weitere Base als auch weitere, in Mineralsäure aufgenommene hydrolysierbare Zinnverbindung, vorzugsweise eine HCl/$SnCl_4$-Lösung unter Aufrechterhaltung eines konstanten pH-Wert zugegeben. Die Zugabe findet vorzugsweise bei erhöhter Temperatur im Bereich von 60 bis 80°C statt. Zur Vervollständigung bzw. besseren Ausbildung der SnO$_{2aq}$-Schicht wird der pH-Wert wiederum in den sauren Bereich abgesenkt, vorzugsweise mit Salzsäure auf pH 0 bis 2. Sodann erfolgt vorzugsweise in der Wärme die Zugabe der Dotierkomponente in Form einer hydrolysierbaren Antimonverbindung vorzugsweise SbCl$_3$. Eine ggf. folgende Alterung der Hydroxid-Gele dient der Ausbildung der Halbleitervorstufe. Hierdurch werden eine homogenere Verteilung des Antimonhydroxids in der Zinnhydroxid-Matrix und damit bessere Halbleitereigenschaften erreicht.

Werden die aus den Löslichkeitsprodukten (pK$_L$ Sn(OH)$_4$ : 56; pK$_L$ Sb(OH)$_3$ : 41.4) berechneten Konzentrationen von Zinn bzw. Antimon gegen den pH-Wert aufgetragen, so werden zwei Geraden unterschiedlicher Steigung erhalten, die sich bei etwa pH = 0 schneiden. Mit der ungefähr gleichen Löslichkeit von Zinn und Antimon im Bereich des Schnittpunktes geht bei genügend häufigem Auf- und Abbau des Hydroxid-Gitters im mikroskopischen Bereich bei der Alterung eine gleichmäßige Verteilung von Zinn und Antimon einher.

Die Konzentrationen der hydrolysierbaren Zinn- bzw. Antimonverbindungen richten sich nach den physikalischen Eigenschaften der verwendeten Verbindungen und liegen zwischen 0,1 und 500 g/l. Es wird dabei lediglich gefordert, daß die jeweils zugesetzten Lösungen keine schlechter löslichen, hydrolysierbaren Verbindungen enthalten als es die Hydroxide/Oxide dieser Elemente unter den jeweiligen Bedingungen sind.

Nach einer Fest-Flüssig-Separation wird das beschichtete Rutilmischphasen-Pigment getrocknet und zur Erzielung der elektrischen Leitfähigkeit geglüht. Die Glühtemperatur beträgt 300 bis 800, vorzugsweise 400 bis 600°C.

Mit dem Verfahren der Erfindung werden elektrisch leitfähige - und je nach Zusammensetzung des Grundkörpers - bunte Rutilmischphasen-Pigmente erhalten, die eine stabile elektrische Leitfähigkeit, gute Dispergierbarkeit und hohe Farbtonbeständigkeit aufweisen und die besonders geeignet zur Einarbeitung und Einfärbung von Kunststoffen und Anstrichmassen und zu deren antistatischen Ausrüstung sind. Ein weiterer Gegenstand der Erfindung ist daher die Verwendung der elektrisch leitfähigen Rutilmischphasen-Pigmente zur Einfärbung und antistatische Ausrüstung von Kunststoffen, synthetischen Fasern, Laminatpapieren, ferner zur Herstellung elektrisch leitfähiger Klebeverbindungen oder zur Erzeugung eingefärbter Anstrichmassen mit antistatischen Eigenschaften.

Die Erfindung weist Vorteile auf. Es werden elektrisch leitfähige, farbige Rutilmischphasen-Pigmente sowie ein einfach durchzuführendes Verfahren zu deren Herstellung bereitgestellt. Die Produkte weisen eine stabile elektrische Leitfähigkeit auf, sind in Kunststoffen und Synthesefasern homogen dispergierbar und erübrigen bei der Einfärbung praktisch weitere Farbpigmente und rüsten die Produkte antistatisch aus. Gleiches trifft auch für Anstrich- bzw. Beschichtungsmassen und Klebstoffzusammensetzungen zu, welche die elektrisch leitfähigen Rutilmischphasen-Pigmente der Erfindung enthalten.

Die Erfindung wird anhand der nachstehenden Beispiele näher und beispielhaft erläutert.

Beispiel 1

100 g eines Rutilmischphasen-Pigments enthaltend (Ti, Ni, Sb)-Oxid (Sicotan Gelb L 1010 der Fa. BASF AG) (spez. Oberfläche 3 m$^2$/g) wurden in 400 ml Wasser von 70°C suspendiert und mit Salzsäure auf pH 2 eingestellt. Danach wurden 500 ml Wasser von 70°C, 1 ml SnCl$_4$ und 1 ml HCl (konz.) zugesetzt. Die entstandene gelbe Suspension wurde bei pH 1,5 während 60 min nachgerührt. Nachfolgend wurden gleichzeitig 800 ml 10 %-iger NaOH und 31 ml SnCl$_4$, gelöst in 100 ml 2 molarer HCl, zugegeben und noch 30 min nachgerührt. Die Gesamtzeit dieses Schrittes belief sich auf 120 min, die Temperatur betrug 70°C. Innerhalb der nächsten 90 min wurde der pH-Wert mit HCl auf 2,5 gesenkt und 5,3 g SbCl$_3$, gelöst in 100 ml 2 molarer HCl sowie 170 ml 10 %-ige NaOH gleichzeitig zugetropft. Die gelbe Suspension wurde 20 h bei 70°C belassen. Anschließend wurde der Feststoff separiert und getrocknet. Die spezifische Pulverleitfähigkeit betrug nach Glühung bei 500°C (1) bzw. 600°C (2) 1.4 . 10$^{-4}$ . ($\Omega$cm)$^{-1}$ (1) bzw. 5.1 . 10$^{-3}$ ($\Omega$cm)$^{-1}$ (2).

Beispiel 2

100 g eines Rutilmischphasen-Pigments enthaltend (Ti, Cr, Sb)-Oxid (d$_{50}$: 1,3 $\mu$)(1) (Ferro P 630 der Fa. Ferro) wurden in 400 ml H$_2$O suspendiert und mit Salzsäure auf pH 2 eingestellt. Danach wurden 500 g H$_2$O, 1 ml SnCl$_4$ und 1 ml konz. HCl zugesetzt, so daß sich ein pH-Wert von 1,5 einstellte. Die orangefarbene Suspension wurde 1 h bei Raumtemperatur gerührt. Anschließend wurden 500 ml 10 %-ige NaOH zugesetzt und die Suspension auf 70°C erwärmt. Innerhalb von 90 min wurde ein SnCl$_4$-Lösung (31 ml SnCl$_4$ in 69 ml 2 molarer HCl gelöst) zugetropft. Zur Stabilisierung des pH-Wertes mußten weitere 20 ml 10 %-ige NaOH zugegeben werden. Die orangefarbene Suspension wurde 0,5 h bei 760°C gerührt. Danach wurden innerhalb von 1,5

(1) Unter "d$_{50}$ ($\mu$)" wird der Zentralwert der Partikelgrößenverteilung verstanden. Er stellt das geometrische Mittel aller Teilchendurchmesser dar, d.h. die Teilchengröße, die einem "Rückstand" von 50 % zuzuordnen ist.

4

h ca. 110 ml 2 molare HCl zugetropft, so daß sich ein pH-Wert von 2,5 einstellte. Anschließend wurden gleichzeitig 120 ml 10 %-ige NaOH und 100 ml SbCl$_3$-Lösung (5,3 g SbCl$_3$ in 100 ml 2 molarer HCl gelöst; sowie einige Tropfen konz. HCl) zugetropft, so daß der pH-Wert konstant blieb.

Danach wurde die orangefarbene Suspension 20 h bei 70°C nachgerührt. Nach 20 h wurde die Suspension abfiltriert und gewaschen. Das Produkt wurde bei 110°C getrocknet und anschließend 1 h bei 600°C geglüht.

Die spezifische Pulverleitfähigkeit betrug $2,7 \cdot 10^{-2}$ $(\Omega\text{cm})^{-1}$.

Beispiel 3

100 g eines Rutilmischphasen-Pigments enthaltend (Ti, Ni, Sb)-Oxid (Ferro P 610 der Firma Ferro; d$_{50}$ = 0,9 μ) wurden in 400 ml Wasser suspendiert und mit HCl auf pH 2 angesäuert. Danach wurden 500 g H$_2$O, ca. 2 ml konz. HCl und 1 ml SnCl$_4$ zugesetzt, so daß sich ein pH-Wert von ca. 1,5 einstellte. Die gelbe Suspension wurde 1 h bei Raumtemperatur nachgerührt. Anschließend wurden 500 ml 10 %-ige NaOH zugesetzt. Die Suspension wurde auf 70°C erwärmt. Innerhalb von 1,5 h wurde sodann eine SnCl$_4$-Lösung (31 ml SnCl$_4$ gelöst in 69 ml 2 molarer HCl) zugetropft. Da der pH-Wert während des Zutropfens nicht unter 11,5 sinken sollte, wurden weitere 140 ml 10 %-ige NaOH zugesetzt. Die gelbe Suspension wurde noch 0,5 h bei 70°C gerührt. Danach wurden innerhalb von 1,5 h ca. 210 ml 2 molarer HCl zugetropft, so daß sich ein pH-Wert von 2,5 einstellte. Anschließend wurden gleichzeitig 115 ml 10 %-ige NaOH und 100 ml SbCl$_3$-Lösung (5,3 g SbCl$_3$ gelöst in 100 ml 2 molarer HCl und einigen Tropfen konz. HCl) zugetropft, so daß der pH-Wert der Suspension konstant blieb.

Danach wurde das Produkt 20 h bei 70°C nachgerührt. Anschließend wurde das abfiltrierte und bei 110°C getrocknete Produkt 1 h bei 600°C geglüht.

Die spez. Pulverleitfähigkeit betrug $6,5 \cdot 10^{-2}$ $(\Omega\text{cm})^{-1}$.

Beispiel 4

100 g eines Rutilmischphasen-Pigments enthaltend (Ti, Cr, Sb)-Oxid (Sicotan L 2010 der Fa. BASF AG, spez. Oberfläche 5 m$^2$/g) wurden in 400 ml Wasser suspendiert und mit HCl auf pH 2 angesäuert. Danach wurden 500 g H$_2$O, ca. 1,5 ml konz. HCl und 1 ml SnCl$_4$ zugesetzt, so daß sich ein pH-Wert von ca. 1,5 einstellte. Die orangefarbene Suspension wurde 1 h bei Raumtemperatur gerührt. Anschließend wurden 500 ml 10 %-ige NaOH zugesetzt und die Suspension auf 70°C erwärmt. Innerhalb von 1,5 h wurde sodann eine SnCl$_4$-Lösung (31 ml SnCl$_4$ + 69 ml 2 molare HCl) zugetropft. Da der pH-Wert während des Zutropfens nicht unter 11,5 sinken sollte, wurden weitere 85 ml 10 %-ige NaOH zugesetzt. Die orangefarbene Suspension wurde 0,5 h bei 70°C gerührt. Danach wurden innerhalb von 1,5 h ca. 210 ml 2 molare HCl zugetropft, so daß sich ein pH-Wert von 2,5 einstellte. Anschließend wurden gleichzeitig 115 ml 10 %-ige NaOH und ca. 100 ml SbCl$_3$-Lösung (5,3 g SbCl$_3$ gelöst in 100 ml 2 molarer HCl und einigen Tropfen konz. HCl) zugetropft, so daß der pH-Wert ca. 2,5 betrug. Das Zutropfen war nach 1 h beendet. Danach wurde das Produkt 20 h bei 70°C nachgerührt. Anschließend wurde das abfiltrierte orangefarbene Produkt bei 110°C getrocknet und 1 h bei 600°C geglüht.

Die spezifische Pulverleitfähigkeit betrug $4,9 \cdot 10^{-2}$ $(\Omega\text{cm})^{-1}$.

Beispiel 5

100 g eines Rutilmischphasen-Pigments enthaltend (Ti, Ni, Sb)-Oxid (Sicotan L 1012 der Fa. BASF AG, spez. Oberfläche 3 m$^2$/g) wurden in 300 ml Wasser suspendiert und mit HCl auf pH 2 eingestellt. Danach wurden noch 600 g H$_2$O, ca. 1 ml HCl konz. zugesetzt, so daß sich ein pH-Wert von ca. 1,5 einstellte. Die gelbe Suspension wurde 1 h bei Raumtemperatur nachgerührt. Anschließend wurden 500 ml 10 %-ige NaOH zugesetzt und die Suspension auf 70°C erwärmt. Innerhalb von 1,5 h wurde sodann eine SnCl$_4$-Lösung (31 ml SnCl$_4$ + 69 ml 2 molare HCl) zugetropft. Da der pH-Wert während des Zutropfens nicht unter 11,5 sinken sollte, wurden weitere 120 ml 10 %-ige NaOH zugesetzt. Die gelbe Suspension wurde 0,5 h bei 70°C nachgerührt. Danach wurden innerhalb von 1,5 h ca. 120 ml 2 molare HCl zugetropft, so daß sich ein pH-Wert von 2,5 einstellte. Anschließend wurden gleichzeitig 115 ml 10 %-ige NaOH und 100 ml SbCl$_3$-Lösung (5,3 g SbCl$_3$ gelöst in 100 ml 2 molarer HCl und einige Tropfen konz. HCl) zugetropft, so daß der pH-Wert ca. 2,5 betrug. Das Zutropfen war nach 1 h beendet. Danach wurde die gelbe Suspension 20 h bei 70°C gerührt, filtriert und das erhaltene Produkt bei 110°C getrocknet und anschließend 1 h bei 600°C geglüht.

Die spezifische Pulverleitfähigkeit wurde zu $1.1 \cdot 10^{-2}$ $(\Omega\text{cm})^{-1}$ bestimmt.

Tabelle 1

Helligkeiten von bunten Rutilmischphasen-Pigmenten

| Pigment-Typ | Hellbezugswert y | | Helligkeits-abfall in % |
| | unbehandelt | beschichtet | |
| --- | --- | --- | --- |
| (Ti, Ni, Sb)-Oxid Sicotan L 1010 BASF AG | 82,2 | 59,8 | 15,1 |
| (Ti, Cr, Sb)-Oxid Ferro P 630 | 47,2 | 43,8 | 7,2 |
| (Ti, Ni, Sb)-Oxid Ferro P 610 | 80,6 | 53,3 | 19,0 |
| (Ti, Cr, Sb)-Oxid Sicotan L 2010 BASF AG | 54,5 | 45,0 | 17,4 |
| (Ti, Ni, Sb)-Oxid Sicotan L 1012 BASF AG | 85,1 | 72,7 | 14,6 |

**Patentansprüche**

1. Elektrisch leitfähiges anorganisches Buntpigment, dadurch gekennzeichnet, daß das Buntpigment aus einem Rutilmischphasen-Pigment als Substrat besteht, das einen elektrisch leitfähigen Überzug aus mit Antimon dotiertem Zinnoxid aufweist.

2. Elektrisch leitfähiges anorganisches Buntpigment nach Anspruch 1, dadurch gekennzeichnet, daß das Substrat eine spezifische Oberfläche (BET) von 1 bis 10, vorzugsweise von 3 bis 5 m$^2$/g besitzt.

3. Elektrisch leitfähiges anorganisches Buntpigment nach den Ansprüchen 1 bis 2, dadurch gekennzeichnet, daß das Substrat die gleiche Kristallstruktur wie die Sb-dotierte Zinndioxid-Überzugsschicht (Cassiterit) besitzt.

4. Elektrisch leitfähiges anorganisches Buntpigment nach den Ansprüchen 1 bis 3, dadurch gekennzeichnet, daß die Dicke der Überzugsschicht 2 bis 80, vorzugsweise 10 bis 30 nm beträgt.

5. Elektrisch leitfähiges anorganisches Buntpigment nach den Ansprüchen 1 bis 4, dadurch gekennzeichnet, daß die Zinndioxid-Überzugsschicht 1 bis 15, vorzugsweise 6 bis 12 Gew.-% Antimonoxid enthält.

**6.** Verfahren zur Herstellung eines elektrisch leitfähigen anorganischen Buntpigments, dadurch gekennzeichnet, daß eine mineralsaure wäßrige Dispersion eines Rutilmischphasen-Pigments unter stetem Rühren mit einer mineralsauren hydrolysierbare Zinnverbindungen enthaltenden Lösung sowie mit einer mineralsauren hydrolysierbare Antimonverbindungen enthaltenden Lösung versetzt wird, die hydrolysierbaren Verbindungen durch Erhöhung des pH-Wertes hydrolysiert werden und das mit den hydroxidischen Fällungsprodukten überzogene Rutilmischphasen-Pigment ggf. nach Alterung abgetrennt, getrocknet und calciniert wird.

**7.** Verfahren nach Anspruch 6, dadurch gekennzeichnet, daß die mineralsauren hydrolysierbare Verbindungen enthaltenden Lösungen nacheinander und jeweils nach Hydrolyse der betreffenden Zinnverbindungen der wäßrigen Dispersion des Rutilmischphasen-Pigments zugesetzt werden.

**8.** Verfahren nach den Ansprüchen 6 bis 7, dadurch gekennzeichnet, daß die hydrolysierbare Verbindungen enthaltenden Lösungen salzsauer sind.

**9.** Verfahren nach den Ansprüchen 6 bis 8, dadurch gekennzeichnet, daß die hydrolysierbaren Verbindungen Zinn-IV-chlorid und Antimon-III-chlorid sind.

**10.** Verfahren nach den Ansprüchen 6 bis 9, dadurch gekennzeichnet, daß der wäßrigen Dispersion des Rutilmischphasen-Pigments zunächst bei einem pH-Wert <3 ein Teil der mineralsauren Lösung der hydrolysierbaren Zinnverbindung zugegeben wird und die Hauptmenge anschließend zugegeben und bei einem pH-Wert >10 hydrolysiert wird, worauf die mineralsaure Lösung der Antimonverbindung zugesetzt und bei einem pH-Wert <3 hydrolysiert wird.

**11.** Verwendung der elektrisch leitfähigen Rutilmischphasen-Pigmente nach den Ansprüchen 1 bis 10 zur Einfärbung und antistatischen Ausrüstung von Kunststoffen, Synthesefasern, Laminatpapieren, zur Herstellung elektrisch leitfähiger Klebstoffzusammensetzungen oder zur Erzeugung eingefärbter Anstrichmassen mit antistatischen Eigenschaften.

## Claims

**1.** An electrically conductive inorganic pigment having a chromatic colour, characterized in that the pigment having a chromatic colour consists of a rutil mixed-phase pigment as a substrate, which is provided with an electrically conductive coating of an antimony-doted tin oxide.

**2.** An electrically conductive inorganic pigment having a chromatic colour according to claim 1, characterized in that the substrate has a BET surface area of 1 to 10, preferably 3 to 5, m$^2$/g.

**3.** An electrically conductive inorganic pigment having a chromatic colour according to claims 1 and 2, characterized in that the substrate has the same crystal structure as the coating layer of Sb-doped tin oxide (cassiterite).

**4.** An electrically conductive inorganic pigment having a chromatic colour according to claims 1 to 3, characterized in that the coating layer has a thickness of 2 to 80 preferably 10 to 30, nm.

**5.** An electrically conductive inorganic pigment having a chromatic colour according to claims 1 to 4, characterized in that the coating layer of tin oxide contains 1 to 15, preferably 6 to 12, % by weight antimony oxide.

**6.** A process of producing an electrically conductive inorganic pigment having a chromatic colour, characterized in that a solution of hydrolyzable tin compounds in a mineral acid and a solution of hydrolyzable antimony compounds in a mineral acid are added with continuous stirring to an aqueous dispersion of a rutile mixed-phase pigment in a mineral an aqueous mineral acid, the hydrolyzable compounds are hydrolyzed by an increase of the pH-value, and the rutile mixed-phase pigment coated with the precipitated hydroxides is optionally aged and is separated, dried and calcined.

**7.** A process according to claim 6, characterized in that the solutions of hydrolyzable compounds in mineral acid are added to the aqueous dispersion of the rutile mixed-phase pigment in succession after the hy-

7

drolysis of the respective tin compounds.

8. A process according to claims 6 and 7, characterized in that the solutions containing the hydrolyzable compounds are hydrochloric acid solutions.

9. A process according to claims 6 and 8, characterized in that the hydrolyzable compounds are tin(IV) chloride and antimony(III) chloride.

10. A process according to claims 6 to 9, characterized in that a part of the solution of the hydrolyzable tin compound in a mineral acid is initially added to the aqueous dispersion of the rutile mixed-phase pigment at a pH-value <3, the main amount is subsequently added and is hydrolyzed at a pH-value >10 and the solution of the antimony compound in a mineral acid is subsequently added and is hydrolyzed at a pH-value >3.

11. The use of the electrically conductive rutile mixed-phase pigment according to claims 1 to 10 for dyeing and for an antistatic treatment of plastics, synthetic fibres, laminated papers or for producing electrically conductive adhesive compositions or for producing coloured paint compositions having antistatic properties.

## Revendications

1. Pigment de couleur minéral, conducteur de l'électricité, caractérisé en ce que le pigment de couleur est constitué d'un pigment en phase mixte de type rutile en tant que substrat, qui comporte un revêtement conducteur de l'électricité en oxyde d'étain dopé à l'antimoine.

2. Pigment de couleur minérale conducteur de l'électricité suivant la revendication 1, caractérisé en ce que le substrat a une surface spécifique (BET) de 1 à 10, et de préférence, de 3 à 5 m²/g.

3. Pigment de couleur minérale conducteur de l'électricité suivant la revendication 1 ou 2, caractérisé en ce que le substrat a la même structure cristalline que la couche de revêtement en dioxyde d'étain dopée au Sb (cassitérite).

4. Pigment de couleur minérale conducteur de l'électricité suivant l'une des revendications 1 à 3, caractérisé en ce que l'épaisseur de la couche de revêtement est comprise entre 2 et 80, de préférence entre 10 nm et 30 nm.

5. Pigment de couleur minérale conducteur de l'électricité suivant l'une des revendications 1 à 4, caractérisé en ce que la couche de revêtement en dioxyde d'étain contient de 1 à 15, et de préférence, de 6 à 12 % en poids de monoxyde d'antimoine.

6. Procédé de préparation d'un pigment de couleur minéral, conducteur de l'électricité, caractérisé en ce qu'il consiste à mélanger une dispersion aqueuse dans de l'acide minéral d'un pigment en phase mixte à base de rutile, tout en agitant constamment, à une solution contenant des composés d'étain susceptible d'être hydrolysés par des acides minéraux ainsi qu'à une solution contenant des composés d'antimoine susceptibles d'être hydrolysés par des acides minéraux, à hydrolyser les composés hydrolysables par élévation du pH et à séparer, sécher et calciner le pigment en phase mixte à base de rutile revêtu des produits de précipitation hydroxydés, le cas échéant après vieillissement.

7. Procédé suivant la revendication 6, caractérisé en ce qu'il consiste à ajouter des solutions contenant des composés susceptibles d'être hydrolysés par des acides minéraux l'une après l'autre, et chacune après l'hydrolyse des composés d'étain concernés de la dispersion aqueuse du pigment en phase mixte à base de rutile.

8. Procédé suivant la revendication 6 ou 7, caractérisé en ce que les solutions contenant des composés hydrolysables sont des solutions chlorhydriques.

9. Procédé suivant l'une des revendications 6 à 8, caractérisé en ce que les composés hydrolysables sont le chlorure d'étain IV et le chlorure d'antimoine III.

10. Procédé suivant l'une des revendications 6 à 9, caractérisé en ce qu'il consiste à ajouter à la dispersion aqueuse du pigment en phase mixte à base de rutile, d'abord à un pH inférieur à 3, une partie de la solution dans un acide minéral du composé d'étain hydrolysable et à ajouter ensuite la quantité principale et à hydrolyser un pH supérieur à 10, puis à ajouter la solution dans un acide minéral du composé d'antimoine et à hydrolyser un pH inférieur à 3.

11. Utilisation des pigments en phase mixte à base de rutile, conducteur de l'électricité, suivant les revendications 1 à 10, pour teindre et pour rendre antistatiques des matières plastiques, des fibres de synthèse, des papiers couchés, pour préparer des compositions adhésives conductrices de l'électricité ou pour produire des peintures colorées ayant des propriétés antistatiques.

Leitfähigkeit $[(\Omega \cdot cm)^{-1}]$

F i g.1

1,00 E-00

1,00 E-05

1,00 E-10

0          10          20          30          40     100

Gew.-% $SnO_2$ (Sb)

EP 0 415 478 B1